# EUROPÄISCHE PATENTANMELDUNG

(11) **EP 0 735 080 A2**
(43) Veröffentlichungstag der Anmeldung: **02.10.1996**
(21) Anmeldenummer: 96104414.6
(22) Anmeldetag: 20.03.1996
(51) Int. Cl.: C08J 5/18, C08L 3/12

(54) **Verfahren zur Herstellung von Folien aus Stärke**

(30) Priorität: 31.03.1995 DE 19512252
(71) Anmelder: Fraunhofer-Gesellschaft zur Förderung der angewandten Forschung e.V., D-80636 München (DE)
(72) Erfinder: Weigel, Peter, Dr. Dipl.-Phys., 14532 Kleinmachnow (DE); Schwarz, Wolfgang, Dipl.-Ing., 14532 Kleinmachnow (DE); Frigge, Konrad, Dr. Dipl.-Phys., 14478 Potsdam (DE); Vorwerg, Waltraud, Dr. Dipl.-Chem., 14478 Potsdam (DE)
(74) Vertreter: Pfenning, Meinig & Partner

(57) **Zusammenfassung**

Die Erfindung betrifft ein Verfahren zur Herstellung von Folien aus Stärke und Weichmachern mit einem Extrusionsblasverfahren, bei dem als Stärke eine Mischung von 10 bis 40 Gew.% Hochamylosestärke und 90 bis 60 Gew.% Normalamylosestärke, jeweils bezogen auf die Gesamtmenge an Stärke, eingesetzt wird.

## Beschreibung

Die Erfindung betrifft ein Verfahren zur Herstellung von Folien aus Stärke mit einem Extrusionsblasverfahren und mit diesem Verfahren herstellbare Folien.

Wachsende Müllberge und ein gestiegenes Umweltbewußtsein haben dazu geführt, daß in verstärktem Maße Anstrengungen unternommen werden, nicht oder nur schwer biologisch abbaubare Kunststoffe, wie z.B. Polyethylen, Polyvinylchlorid oder Polystyrol, durch biologisch abbaubare und daher kompostierbare zu ersetzen. Dies gilt in besonderem Maße auch für Folien für den Einsatz als Verpackungsmittel und in der Landwirtschaft.

Als biologisch abbaubares Polymer, das keinerlei schädliche Rückstände hinterläßt, bietet sich Stärke an, zumal sie als nachwachsender Rohstoff in großen Mengen zu günstigen Preisen verfügbar ist. Es ist bekannt, daß Stärke unter Hinzugabe von geeigneten Weichmachern bei Temperaturen zwischen 100 und 200° C thermoplastisch verarbeitbar ist. Über die Art und Menge der Weichmacher und gegebenenfalls auch anderer Füllstoffe liegt eine Vielzahl von Anwendungen vor, ebenso über die Verarbeitung zu Folien, Fasern, Spritzgußkörpern und Schaumkörpern. Die Verarbeitung ist auf konventionellen Kunststoffverarbeitungsmaschinen möglich. Als vorteilhaft hat sich erwiesen, in einem ersten Extrusionsschritt zunächst ein Granulat herzustellen, das anschließend in einem zweiten Extrusionsschritt zu den gewünschten Formkörpern verarbeitet wird.

Aus der DE 42 28 016 ist ein einstufiges Verfahren zum Herstellen von biologisch abbaubaren Folien aus pflanzlichen Rohstoffen bekannt, wobei die Folien unter anderem auch durch Extrusionsblasen hergestellt werden. Bei den pflanzlichen Rohstoffen wird unter anderem auch Stärke vorgeschlagen. Bei den Stärken sind sowohl sog. Normalamylosestärken (Kartoffelstärke), wie auch Hochamylosestärken (Mais mit hohem Amylosegehalt) erwähnt. Werden jedoch Folien, sei es nun nach dem einstufigen Prozeß nach der DE 42 28 016 oder nach dem bekannten zweistufigen Verfahren unter Verwendung von Normalamylosestärke hergestellt, so ist bei der Herstellung in den ersten Stunden ein starker Schrumpf (ca. 30 bis 50%) festzustellen. Günstig ist hierbei allerdings, daß hier ein großes Aufblasverhältnis (> 4) eingehalten werden kann. Wird jedoch mit Hochamylosestärke, z.B.Amylomaisstärke, gearbeitet, so ist nur noch ein Aufblasverhältnis von maximal 2,5 erreichbar, wohingegen dann der Schrumpf nur sehr gering ist (< 10%).

Ausgehend hiervon ist es die Aufgabe der vorliegenden Erfindung, ein neues Verfahren und entsprechende Folien vorzuschlagen, bei denen mit optimalen Herstellungsbedingungen in bezug auf ein möglichst hohes Aufblasverhältnis und einen möglichst geringen Schrumpf gearbeitet werden kann.

Überraschenderweise zeigt sich nun, daß beim Mischen der Hochamylose- und der Normalamylosestärke keinesfalls eine lineare Abhängigkeit sowohl des maximalen Aufblasverhältnisses als auch des Schrumpfes vom Gesamtamylosegehalt der Mischung vorliegt. Vielmehr bewirkt schon ein relativ geringer Anteil an Hochamylosestärke in der Stärkemischung eine starke Verringerung des Schrumpfes der Folie bei nur wenig geringertem maximalen Aufblasverhältnis. Erfindungsgemäß beträgt der Anteil der Hochamylosestärke an der Gesamtmenge der eingesetzten Stärke 10 bis 40%, vorzugsweise 15 bis 20%. Wenn nun diese Verfahrensbedingungen eingehalten werden, so lassen sich Folien herstellen, die mit einem relativ hohen Aufblasverhältnis (mindestens 2,5), trotzdem nur eine äußerst geringe Schrumpfung (im Bereich von 10%) aufweisen. Erfindungsgemäß wird unter Aufblasverhältnis der Faktor verstanden, um dem der Durchmesser des aufgeblasenen Folienschlauches größer ist als der Düsendurchmesser bei konstanter Abzugsgeschwindigkeit.

Daß dieses überraschende Ergebnis auch für den Fachmann nicht vorhersehbar war, wird besonders deutlich, wenn die Beispiele 1 und 2 mit den Ausführungsbeispielen 3 bis 7 verglichen werden. Wird nämlich eine Blasfolie aus Kartoffelstärke hergestellt (Vergleichsbeispiel 1), so ist zwar ein Aufblasverhältnis von 4 erreichbar, der Schrumpf beträgt jedoch 45%. Wenn nun statt Kartoffelstärke Hochamylosestärke verwendet wird, so ist zwar eine Verringerung des Schrumpfes auf 8% möglich, das Aufblasverhältnis beträgt aber hier nur noch 2,2. Mit der erfindungsgemäßen Stärkemischung ist hingegen ein Aufblasverhältnis von mindestens 2,5 realisierbar, wobei gleichzeitig der Schrumpf im Bereich von 8 bis max. 20% liegt. Damit zeigt sich das erfindungsgemäße Verfahren und auch die mit diesem Verfahren herstellbaren Folien, gegenüber dem bisher bekannten, in bezug auf die vorstehend erwähnten Eigenschaften deutlich überlegen.

Erfindungsgemäß werden hierbei als Hochamylosestärke Stärken eingesetzt, deren Amylosegehalt > 50% ist. Beispiele für solche Hochamylosestärken sind Amylomais- oder Markerbsenstärke. Bei den Normalamylosestärken sind Kartoffel-, Mais- oder Weizenstärke bevorzugt.

Bevorzugt wird das erfindungsgemäße Verfahren so ausgeführt, daß der Stärke noch ein Weichmacher zugesetzt wird. Mit dem Weichmacher ist es nämlich möglich, den Extrusions- und Blasvorgang sowie die mechanischen Eigenschaften der herstellbaren Stärkefolien ganz wesentlich zu beeinflussen. Das erfindungsgemäße Verfahren schließt alle aus dem Stand der Technik für Extrusionsblasverfahren bisher bekannten Weichmacher ein. Besonders bevorzugt ist es hierbei, wenn eine Kombination von mehreren Weichmachern, wie z.B. in der US 2,570,449 vorgeschlagen wird, eingesetzt wird. Die Erfindung schließt deshalb ausdrücklich alle in dieser US 2,570,449 erwähnten Weichmacher mit ein. Ganz besonders bevorzugt ist es jedoch, wenn als Weichmacher Wasser, Glycerin und Harnstoff sowie Polyethylenglycol (PEG) eingesetzt werden. Der Einsatz von Polyethylenglycol als Weichmacher ist zwar bisher schon bekannt (siehe DE 37 12 029), jedoch wird hier immer ausschließlich Polyethylenglycol mit einem Molekulargewicht von 200 bis 4.000 eingesetzt. Gemäß einer besonders bevorzugten Ausführungsform wird nun vorgeschlagen, daß nicht ein PEG mit einem Molekulargewicht von bis zu 4.000 eingesetzt wird, sondern mit einem Molekulargewicht > 20.000. Überraschenderweise hat sich nämlich gezeigt, daß, wenn dem Weichmacher ein derartiges PEG mit einem Molekulargewicht von > 20.000, bevorzugt sogar > 30.000 zugesetzt wird, der Extrusionsvorgang günstig beeinflußt werden kann und die Folien gute mechanische Eigenschaften, z.B. in bezug auf die Reißfestigkeit, aufweisen. Erfindungsgemäß wird daher dem in bekannter Weise als Weichmacher verwendeten Gemisch aus Wasser, Glycerin und Harnstoff noch PEG mit einem Molekulargewicht > 20.000, vorzugsweise > 30.000, hinzugefügt. Bezogen auf die Gesamtmasse des zu extrudierenden Materials aus einem Gemisch aus Normalamylose- und Hochamylosestärke und Weichmachern beträgt der Anteil des Wassers 5 bis 15%, vorzugsweise 7,5 bis 10%, des Glycerins 10 bis 20%, vorzugsweise 10 bis 15%, des Harnstoffs 5 bis 15%, vorzugsweise 7,5 bis 10%, und des PEG 2 bis 6%, vorzugsweise 4 bis 5%.

Das vorstehend beschriebene Verfahren kann entweder einstufig oder auch zweistufig betrieben werden. Es hat sich gezeigt, daß es günstiger ist, wenn ein zweistufiger Verfahrensablauf ausgewählt wird. Hierbei wird dann, wie an und für sich aus dem Stand der Technik bekannt, im ersten Extrusionsschritt ein Granulat hergestellt und im zweiten Schritt dieses zur Blasfolie verarbeitet. Im ersten Verfahrensschritt wird bevorzugterweise mit einem Zweischneckenextruder gearbeitet. Die Temperatur und der Druck im Extruder müssen dabei hinreichend groß sein, um einen vollständigen Aufschluß der Stärke zu gewährleisten. Der Extruder ist dabei, wie grundsätzlich schon bisher aus dem Stand der Technik bekannt, so ausgestaltet, daß er in verschiedenen Zonen, die getrennt heizbar sind, eingeteilt ist. Es kann hierbei ein Vier- oder Sechszonenextruder eingesetzt werden. Das Temperaturprofil kann dabei so ausgelegt sein, daß die Temperatur, beginnend von der ersten Zone zu den dann folgenden Zonen, ansteigt und wieder zur letzten Zone, d.h. bis zur Düse abfällt. Am Extruderausgang muß jedoch die Temperatur so niedrig sein, daß für alle Weichmacherkomponenten der Dampfdruck < 1 bar ist, um ein Aufschäumen des Extrudats zu verhindern. Bevorzugt ist dabei die Zusammensetzung der Weichmacher so ausgewählt, daß ein Verkleben der Granulatkörper beim Granulieren unmittelbar im Anschluß an den ersten Extrusionsschritt verhindert wird.

Im zweiten Extrusionsschritt wird das Granulat bevorzugt mittels einer Ringdüse mit Blasvorrichtung zu einer Schlauchfolie geblasen.

Die Erfindung betrifft weiterhin Blasfolien, die mittels des vorstehend beschriebenen Verfahrens herstellbar sind. Die Festigkeiten der Folien liegen im Bereich von 8 bis 15 MPa.

Die Erfindung wird nachfolgend durch die Vergleichsbeispiele A und B sowie durch die Ausführungsbeispiele 1 bis 5 näher erläutert.

### Vergleichsbeispiele

A. Eine Mischung aus Kartoffelstärke und den Weichmachern Wasser, Glycerin, Harnstoff und Polyethylenglycol mit dem Molgewicht 35.000 wird in einem Zweischneckenextruder zu Granulat verarbeitet. In einem zweiten Extrusionsschritt wird das Granulat mittels einer Ringdüse mit Blasvorrichtung zu einer Schlauchfolie geblasen.

| **Zusammensetzung der Mischung:** | |
|---|---|
| Kartoffelstärke | 67 % |
| Wasser | 8 % |
| Glycerin | 12,5 % |
| Harnstoff | 8 % |
| PEG 35000 | 4,5 % |

| **Temperaturprofil im Extruder:** | |
|---|---|
| 1. Stufe | 100° C |
| 2. Stufe | 145° C |
| 3. Stufe | 120° C |
| 4. Stufe | 100° C |

| **Folieneigenschaften** | |
|---|---|
| Aufblasverhältnis: | 4 |
| Schrumpf: | 45 % |
| Festigkeit: | 8 MPa |

B. Wie Beispiel A, jedoch wird statt Kartoffelstärke die Hochamylosestärke Eurylon 7 verwendet.

| **Folieneigenschaften:** | |
|---|---|
| Aufblasverhältnis: | 2.2 |
| Schrumpf: | 8 % |
| Festigkeit: | 10 % MPa |

### Beispiele

1. Wie Beispiel A, jedoch wird statt Kartoffelstärke ein Gemisch aus Kartoffelstärke und Eurylon 7 im Verhältnis 5 : 1 verwendet.

| **Folieneigenschaften:** | |
|---|---|
| Aufblasverhältnis: | 3 |
| Schrumpf: | 14 % |
| Festigkeit: | 10 MPa |

2. Wie Beispiel 1, mit einem Gemisch aus Kartoffelstärke und Eurylon 7 im Verhältnis 4 : 1.

| **Folieneigenschaften:** | |
|---|---|
| Aufblasverhältnis: | 3.2 |
| Schrumpf: | 16 % |
| Festigkeit: | 9 MPa |

3. Wie Beispiel 2 mit einem Gemisch aus Kartoffelstärke und Eurylon 7 im Verhältnis 3 : 1.

| **Folieneigenschaften:** | |
|---|---|
| Aufblasverhältnis: | 3.4 |
| Schrumpf: | 20 % |
| Festigkeit: | 8 MPa |

4. Wie Beispiel A mit einer Zusammensetzung der Mischung:

| | |
|---|---|
| Kartoffelstärke | 56 % |
| Eurylon 7 | 14 % |
| Wasser | 8 % |
| Glycerin | 12 % |
| Harnstoff | 10 % |

| **Folieneigenschaften:** | |
|---|---|
| Aufblasverhältnis: | 3.1 |
| Schrumpf: | 17 % |
| Festigkeit: | 12 MPa |

5. Wie Beispiel 2 mit PEG 200 anstelle von PEG 35.000.

| **Folieneigenschaften:** | |
|---|---|
| Aufblasverhältnis: | 3.2 |
| Schrumpf: | 17 % |
| Festigkeit: | 10 MPa |

## Patentansprüche

1. Verfahren zur Herstellung von Folien aus Stärke und Weichmachern mit einem Extrusionsblasverfahren,
dadurch **gekennzeichnet**, daß als Stärke eine Mischung von 10 bis 40 Gew.% Hochamylosestärke und 90 bis 60 Gew.% Normalamylosestärke, jeweils bezogen auf die Gesamtmenge an Stärke, eingesetzt wird.

2. Verfahren nach Anspruch 1,
dadurch gekennzeichnet, daß 15 bis 20 Gew.% Hochamylosestärke und 85 bis 80 Gew.% Normalamylosestärke eingesetzt werden.

3. Verfahren nach Anspruch 1 oder 2,
dadurch gekennzeichnet, daß als Normalamylosestärke Kartoffel-, Mais- oder Weizenstärke und als Hochamylosestärke Amylomais- oder Markerbsenstärke mit einem Amylosegehalt von > 50% eingesetzt wird.

4. Verfahren nach mindestens einem der Ansprüche 1 bis 3,
dadurch gekennzeichnet, daß ein Weichmacher eingesetzt wird, der Polyethylenglycol (PEG) enthält.

5. Verfahren nach Anspruch 4,
dadurch gekennzeichnet, daß ein Polyethylenglycol mit Molekulargewicht > 20.000, vorzugsweise > 30.000 eingesetzt wird.

6. Verfahren nach mindestens einem der Ansprüche 1 bis 5,
dadurch gekennzeichnet, daß ein Weichmacher eingesetzt wird, der Wasser, Glycerin, Harnstoff und Polyethylenglycol enthält.

7. Verfahren nach Anspruch 6,
dadurch gekennzeichnet, daß der Anteil des Wassers an der Gesamtmasse der Stärke-Weichmacher-Mischung 5 bis 15 Masse-%, vorzugsweise 7,5 bis 10 Masse-%, der Anteil des Glycerins 10 bis 20 Masse-%, vorzugsweise 10 bis 15 Masse-%, der Anteil des Harnstoffs 5 bis 15 Masse-%, vorzugsweise 7,5 bis 10 Masse-% und der Anteil des PEG 2 bis 6 Masse-%, vorzugsweise 4 bis 5 Masse-% beträgt.

8. Verfahren nach mindestens einem der Ansprüche 1 bis 7,
dadurch gekennzeichnet, daß mit einem Aufblasverhältnis von mindestens 2,5 gearbeitet wird.

9. Verfahren nach mindestens einem der Ansprüche 1 bis 8,
dadurch gekennzeichnet, daß mit einem zweistufigen Extrusionsverfahren gearbeitet wird, wobei im ersten Extrusionsschritt ein Granulat hergestellt wird, das im zweiten Schritt zur Blasfolie verarbeitet wird.

10. Verfahren nach Anspruch 9,
dadurch gekennzeichnet, daß die Zusammensetzung der Weichmacher so ausgewählt wird, daß ein Verkleben der Granulatkörper beim Granulieren unmittelbar im Anschluß an den ersten Extrusionsschritt verhindert wird.

11. Verfahren nach mindestens einem der Ansprüche 1 bis 10,
dadurch gekennzeichnet, daß die Temperatur während des Extrusionsvorganges so ausgewählt wird, daß für alle Weichmacherkomponenten der Dampfdruck am Extruderausgang < 1 bar ist.

12. Folien aus Stärke, herstellbar durch das Verfahren nach mindestens einem der Ansprüche 1 bis 11.

13. Folien nach Anspruch 12,
dadurch gekennzeichnet, daß sie eine Reißfestigkeit > 8 MPa aufweisen.
